# EUROPÄISCHE PATENTANMELDUNG

(11) **EP 1 675 010 A2**
(43) Veröffentlichungstag der Anmeldung: **28.06.2006**
(21) Anmeldenummer: 05021675.3
(22) Anmeldetag: 04.10.2005
(51) Int. Cl.: G06F 12/10

(54) **Verfahren zur Aktualisierung von Einträgen von Adressumsetzpuffern in einem Mehrprozessor-Computersystem**

(30) Priorität: 23.12.2004 DE 102004062287
(71) Anmelder: Fujitsu Siemens Computers GmbH, 80807 München (DE)
(72) Erfinder: Gross, Jürgen, 83026 Rosenheim (DE)
(74) Vertreter: Epping - Hermann - Fischer

(57) **Zusammenfassung**

Die Erfindung betrifft ein Verfahren zur Aktualisierung von Einträgen (3) von Adressumsetzpuffern (2) in einem Mehrprozessor-Computersystem, bei dem jeder Prozessor (1) einen Adressumsetzpuffer (2) aufweist und bei dem ein seitenweise virtuell adressierter Arbeitsspeicher (5) vorgesehen ist. Die Erfindung zeichnet sich dadurch aus, dass eine Tabelle (9) im Arbeitsspeicher (5) vorgesehen ist, in die für jede Speicherseite (6) und jeden Prozessor (1) eingetragen wird, ob zu dieser Speicherseite (6) ein Eintrag (3) im Adressumsetzpuffer (2) des entsprechenden Prozessors (1) vorhanden ist, und dass bei einer Änderung der Adresszuordnung einer Speicherseite (6) eine Meldung ausschließlich an solche Prozessoren (1) gesendet wird, die einen Eintrag (3) für die entsprechende Speicherseite (6) in ihrem Adressumsetzpuffer (2) aufweisen. Die Erfindung betrifft weiterhin ein Mehrprozessor-Computersystem, das zur Durchführung des Verfahrens geeignet ist.

## Beschreibung

Die Erfindung betrifft ein Verfahren zur Synchronisation von Einträgen von Adressumsetzpuffern in einem Mehrprozessor-Computersystem. Die Erfindung betrifft weiterhin ein Mehrprozessor-Computersystem mit einem seitenweise virtuell adressierbaren Arbeitsspeicher, bei dem jeder Prozessor des Mehrprozessor-Computersystems einen Adressumsetzpuffer aufweist.

Computersysteme setzen üblicherweise eine virtuelle Speicherverwaltung ein, bei der Anwenderprogramme und -prozesse Speicherzellen des verfügbaren flüchtigen Speicher (Arbeitsspeicher) nicht direkt unter ihrer physikalischen Adresse adressieren. Stattdessen wird jedem einzelnen Prozess ein eigener Adressraum, bestehend aus einer linearen Folge von Adressen bereitgestellt, der logischer oder virtueller Adressraum genannt wird. Bei einem Speicherzugriff setzt das Betriebssystem die virtuelle Adresse, unter der das Anwenderprogramm eine Speicherzelle führt, in die tatsächliche physikalische Adresse der entsprechenden Speicherzelle des Arbeitsspeicher um.

Ein Vorteil dieser virtuellen Adressierung ist, dass Programmen ein über die Größe des Arbeitsspeichers hinaus gehender Speicherbereich bereitgestellt werden kann. Unabhängig von dem Aufbau des Arbeitsspeichers hat darüber hinaus der virtuelle Adressraum immer den gleichen, einfachen und linearen Aufbau. Weiterhin können durch die virtuelle Speicherverwaltung Adressräume verschiedener Prozesse leicht voneinander getrennt werden und so sensible Daten vor unberechtigtem Zugriff durch andere Prozesse geschützt werden.

Zur Umsetzung einer virtuellen Adresse in eine physikalische Adresse wird beispielsweise eine im Arbeitsspeicher abgelegte Adressumsetztabelle eingesetzt. Zu diesem Zweck wird sowohl der virtuelle Adressraum als auch der Arbeitsspeicher in Blöcke vorgegebener Größe unterteilt, die auch als Seiten bezeichnet werden. Eine Adresse besteht dann jeweils aus einem Adressteil, der Seitenadresse, die eine bestimmte Seite angibt, und einem Adressteil, der Offset-Adresse, die ein Byte (oder eine andere kleinste adressierbare Speichereinheit) innerhalb der Seite beschreibt. In der Adressumsetztabelle ist dann zu einer virtuellen Adresse einer Seite im virtuellen Adressraum die physikalische Adresse einer zugeordneten Seite im Arbeitsspeicher abgelegt. Bei der Umsetzung wird die physikalische Seitenadresse aus der Adressumsetztabelle anhand der virtuellen Seitenadresse entnommen. Die Offset-Adresse ist bei der virtuellen und der physikalischen Adresse gleich. Neben einer solchen einstufigen Zuordnung mit Hilfe einer Tabelle sind verschiedenste weitere Ausführungsformen bekannt, beispielsweise eine mehrstufige Zuordnung mit zwei Tabellen, die häufig als Segment- und Seitentafel bezeichnet werden. Neben der Adresszuordnung können die Tabellen zusätzliche Informationen enthalten, z.B. über den Prozess, dem die entsprechende Seite zugeordnet ist, seinen Besitzer, Zugriffsrechte und Statusinformationen.

Nachteilig bei dieser Methode der Adressumsetzung ist, dass jeder Speicherzugriff mit einem oder mehreren Zugriffen auf die Adressumsetztabellen verbunden ist, was die Zugriffszeiten verlängert. Um die Adressumsetzung zu beschleunigen, wird daher häufig ein schneller Zwischenspeicher (Cachespeicher) für (zumindest einige) Einträge der Adressumsetztabelle eingesetzt, der Adressumsetzpuffer oder Translocation Look-Aside Buffer oder Blaauw-Box genannt wird. Moderne Prozessoren unterstützen die virtuelle Speicherverwaltung typischerweise, in dem sie selbst einen solchen Adressumsetzpuffer bereitstellen, der zum Beispiel als assoziativer Speicher oder als Set-assoziativer Speicher ausgeführt sein kann.

Wie bei jedem schnellen Puffer- oder Cachespeicher muss dafür gesorgt werden, dass die Daten des Puffers, hier die Einträge des Adressumsetzpuffers, und die Ursprungsdaten, also hier die Einträge der Adressumsetztabelle, konsistent gehalten werden. Es ist üblich, dass das Betriebssystem eine Aktualisierung bzw. Synchronisierung der Einträge übernimmt. Problematisch wird diese Aufgabe, wenn in einem Computersystem mehrere Prozessoren mit jeweils eigenem Adressumsetzpuffer vorgesehen sind, die einen gemeinsamen Arbeitsspeicher nutzen. Jede Änderung an einem Eintrag der Adressumsetztabelle im Arbeitsspeicher oder eines Eintrags in einem der Adressumsetzpuffer eines Prozessors wird nach dem Stand der Technik jedem anderen Prozessor gemeldet, damit dieser einen eventuell vorhandenen Eintrag in seinem Adressumsetzpuffer entsprechend anpassen oder entfernen kann. Das dadurch auf dem Bussystem, durch das die Prozessoren und der Arbeitsspeicher miteinander verbunden sind, entstehende Datenaufkommen kann die Leistung des Computersystems negativ beeinflussen.

Um diese Beeinflussung möglichst gering zu halten, werden nach dem Stand der Technik verschiedene Methoden eingesetzt. Zum Einen ist beispielsweise bekannt, dass Prozesse bei ihrem Start unveränderbar einem Prozessor zugeordnet werden. Dadurch, dass der Wechsel eines Prozesses auf einen anderen Prozessor unterbunden wird, wird auch eine damit einhergehende Aktualisierung der Zugriffsrechte in den Zusatzinformationen von Einträgen in den Adressumsetztabelle verhindert. Nachteilig ist allerdings, dass eine optimale Arbeitsverteilung unter allen im System vorhanden Prozessoren durch die feste Zuordnung gestört wird.

Zum Anderen ist bekannt, dass einmal getroffene Zuordnungen von virtuellen Speicherseiten zu physikalischen Speicherseiten nicht gelöst werden, wenn auf die entsprechende Speicherseite absehbar nicht zugegriffen werden wird. Falls zu einem späteren Zeitpunkt doch ein Zugriff erfolgen sollte, besteht die Zuordnung nach wie vor, ohne dass eine Aktualisierung der Einträge von Adressumsetzpuffer und Adressumsetztabelle beim Löschen und Wiederherstellen der Zuordnung durchgeführt werden musste. Der Nachteil dieses Verfahrens ist, dass im Mittel von den einzelnen Prozessen mehr Arbeitsspeicher als notwendig belegt wird.

Es ist daher eine Aufgabe der vorliegenden Erfindung, ein Verfahren zur Aktualisierung von Einträgen von Adressumsetzpuffern in einem Mehrprozessor-Computersystem anzugeben, bei dem die Aktualisierung die Leistungsfähigkeit des Computersystems möglichst wenig negativ beeinflusst. Eine weitere Aufgabe ist, ein Mehrprozessor-Computersystem mit einem seitenweise virtuell adressierbaren Arbeitsspeicher anzugeben, das zur Umsetzung dieses Verfahrens geeignet ist.

Diese Aufgabe wird gelöst durch ein Verfahren gemäß Anspruch 1 sowie durch ein Mehrprozessor-Computersystem gemäß Anspruch 8.

Erfindungsgemäß wird ein Verfahren zur Aktualisierung von Einträgen von Adressumsetzpuffern in einem Mehrprozessor-Computersystem angegeben, bei dem jeder Prozessor einen Adressumsetzpuffer aufweist und bei dem ein seitenweise virtuell adressierter Arbeitsspeicher vorgesehen ist, wobei die Einträge des Adressumsetzpuffers jeweils eine virtuelle Adresse einer Speicherseite, eine zugeordnete physikalische Adresse der Speicherseite und Zusatzinformationen über die Speicherseite aufweisen. Es ist eine Tabelle im Arbeitsspeicher vorgesehen, in die für jede Speicherseite und jeden Prozessor eingetragen wird, ob zu dieser Speicherseite ein Eintrag im Adressumsetzpuffer des entsprechenden Prozessors vorhanden ist. Bei einer Änderung der Zusatzinformationen oder bei einer Änderung oder einer Neuanlage oder einer Löschung der Zuordnung einer physikalischen Adresse zu einer virtuellen Adresse einer Speicherseite wird eine Meldung ausschließlich an solche Prozessoren gesendet, die einen Eintrag für die entsprechende Speicherseite in ihrem Adressumsetzpuffer aufweisen.

Dadurch, dass eine Meldung über Änderungen oder Neuanlagen oder Löschungen der Zuordnung zwischen einer physikalischen Adresse und einer virtuellen Adresse einer Speicherseite oder ihrer Zusatzinformation nur an solche Prozessoren weitergegeben wird, deren Adressumsetzpuffer auch einen entsprechenden Eintrag über die Speicherseite aufweist, wird unnötiges Datenaufkommen auf dem Bussystem, das die Prozessoren und den Arbeitsspeicher verbindet, verhindert. Um diese Meldung selektiv versenden zu können, ist erfindungsgemäß eine Tabelle im Arbeitsspeicher vorgesehen, in der abgelegt ist, zu welchen Speicherseiten Einträge in den Adressumsetzpuffern der verschiedenen Prozessoren geführt werden.

Vorteilhafte Ausgestaltungen und Weiterbildung der Erfindung sind Gegenstand der abhängigen Ansprüche.

Im Folgenden wird die Erfindung anhand eines Ausführungsbeispiels eines erfindungsgemäßen Mehrprozessor-Computersystems mit Hilfe einer Figur näher erläutert.

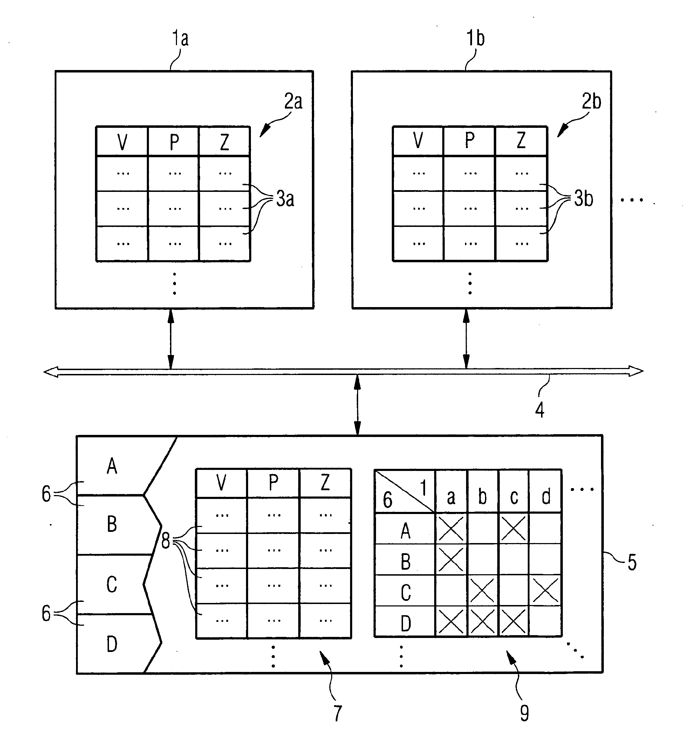

Das Mehrprozessor-Computersystem in der Figur weist mehrere Prozessoren 1 auf, von denen hier zwei Prozessoren 1a und 1b dargestellt sind. Die Prozessoren verfügen jeweils über einen Adressumsetzpuffer 2 (2a, 2b), mit Einträgen 3 (3a, 3b). Jeder Eintrag 3 beinhaltet eine physikalische Adresse P, eine virtuelle Adresse V und Zusatzinformationen Z. Die Prozessoren 1 sind über ein Bussystem 4 mit einem Arbeitsspeicher 5 verbunden. Der Arbeitsspeicher 5 weist eine Vielzahl von Speicherseiten 6 auf, von denen beispielhaft die Speicherseiten 6A, 6B, 6C und 6D gezeigt sind. Weiterhin weist der Arbeitsspeicher 5 eine Adressumsetztabelle 7 mit Einträgen 8 auf, in denen ebenfalls jeweils eine physikalische Adresse P, eine virtuelle Adresse V und Zusatzinformationen Z abgelegt sind. Weiterhin ist im Arbeitsspeicher 5 eine Tabelle 9 vorgesehen, deren Zeilen jeweils eine Speicherseite 6 und deren Spalten jeweils einen Prozessor 1 repräsentieren.

Von dem Mehrprozessor-Computersystem sind in der Figur als erfindungswesentliche Merkmale nur die Prozessoren 1, das Bussystem 4 und der Arbeitsspeicher 5 dargestellt. Es versteht sich, dass das Mehrprozessor-Computersystem weitere, hier nicht gezeigte Komponenten aufweisen kann. Auch ist die Anzahl von zwei Prozessoren 1a, 1b lediglich als ein Beispiel zu verstehen. Die Erfindung ist nicht hierauf beschränkt und erweist sich gerade bei Mehrprozessor-Computersystemen mit einer größeren Zahl von Prozessoren als vorteilhaft.

Wie übliche bei Computersystemen mit einer virtuellen Speicheradressierung ist der Arbeitsspeicher 5 in die Vielzahl von Speicherseiten 6 unterteilt. Die Speicherseiten 6 haben eine vorgegeben Größe, wobei 4 oder 8 kByte ein üblicher Wert für die Größe sind. Die physikalische Adresse P und die virtuelle Adresse V einer Speicherzelle des Arbeitsspeichers 5 unterteilen sich dann in eine Seitenadresse, die eine bestimmte Seite angibt, und eine Offset-Adresse, die ein Byte innerhalb der Seite beschreibt. Die Offset-Adresse ist für P und V gleich, die Seitenadresse wird bei jedem Speicherzugriff umgesetzt. Diese Umsetzung geschieht mit Hilfe der Adressumsetztabelle 7, deren Einträge 8 zu jeder virtuellen Adresse V einer Seite deren physikalische Adresse P beinhalten. Weiterhin nehmen die Einträge 8 die Zusatzinformationen Z auf, in denen z.B. Zugriffsrechte oder Statusinformationen hinterlegt sind. Zugriffsrechte geben an, welcher Prozess oder Benutzer auf eine bestimmte Speicherseite zugreifen darf. Statusinformationen können Angaben darüber sein, ob Dateninhalte dieser Speicherseite im Arbeitsspeicher aktuell sind, oder ob es in einem (hier nicht gezeigten) Cachespeicher bereits geänderte, aktuellere Dateninhalte für diese Speicherseite gibt. Die in diesem Ausführungsbeispiel realisierte Struktur der virtuellen Speicherverwaltung mit der (einstufigen) Adressumsetztabelle 7 ist lediglich als Beispiel zu verstehen. Die Erfindung ist unabhängig von der Struktur der virtuellen Speicherverwaltung und kann auf beliebige Ausgestaltungen der virtuellen Speicherverwaltung übertragen werden.

Um die bei jedem Speicherzugriff notwendige Adressumsetzung mit möglichst wenig Zeitverlust durchführen zu können, weisen die Prozessoren 1, wie aus dem Stand der Technik bekannt, schnelle, als Assoziativspeicher ausgeführte Adressumsetzpuffer 2 auf. Die Einträge 3 der Adressumsetzpuffer 2 sind Kopien ausgewählter Einträge 8 der Adressumsetztabelle 7. Dabei sind verschiedenste Methoden üblich und bekannt, um zu bestimmen, welche Einträge 8 in den Adressumsetzpuffern 2 geführt werden. Im Rahmen der Erfindung ist unerheblich, ob diese Auswahl von einem Prozessor 1 selber getroffen wird, oder ob der Prozessor 1 diese Aufgabe mit Hilfe einer Unterbrechungsaufforderung an das Betriebssystem weiterleitet.

Nach dem Stand der Technik liegen außerhalb eines Prozessors 1 keine Informationen über die Einträge 3 in seinem Adressumsetzpuffer 2 vor. Erfindungsgemäß ist demgegenüber die Tabelle 9 vorgesehen, in der für jeden Prozessor 1 und jede Speicherseite 6 abgespeichert ist, ob zu einer Speicherseite 6 in dem Adressumsetzpuffer 2 des Prozessors 1 ein entsprechender Eintrag 3 existiert. Eine Ausführungsform der Tabelle 9 ist, zu jeder Speicherseite einen Bitvektor, dessen Bitzahl der Zahl der Prozessoren 1 im Computersystem entspricht, vorzusehen. Im gezeigten Beispiel sind die Bitvektoren den physikalischen Speicherseiten 6 zugeordnet. Ebenso ist möglich, die Bitvektor den virtuellen Speicherseiten zuzuordnen, was je nach Auslegung der Speicherverwaltung vorteilhafter sein kann.

Im Fall von Änderungen eines Eintrags 8 der Adressumsetztabelle 7 wird erfindungsgemäß der Bitvektor der entsprechenden Speicherseite 6 eingelesen und bitweise abgefragt. Ist ein Bit gesetzt, wird an den Prozessor 1, für den dieses Bit steht, über das Bussystem 4 eine Meldung über die Änderungen des Eintrags 8 gesendet. Entsprechend der Meldung aktualisiert der Prozessor 1 in seinem Adressumsetzpuffer 2 den Eintrag 3, der sich auf diese Speicherseite 6 bezieht. Eine Änderung kann sich dabei auf eine Änderung der Zuordnung zwischen virtueller Adresse V und physikalischer Adresse P einer Speicherseite oder auf eine Änderung der Zusatzinformation Z beziehen.

Bei jeder Änderung eines Eintrags 3 eines Adressumsetzpuffers 2 muss gewährleistet werden, dass die Tabelle 9 die Inhalte des Adressumsetzpuffers 2 korrekt widerspiegelt. Wird ein Eintrag 3 bezüglich einer Speicherseite 6 in dem Adressumsetzpuffer 2 eines Prozessors 1 neu angelegt, wird das entsprechende Bit in der Tabelle 9 gesetzt, bzw. bei Löschung eines Eintrags 3 zurückgesetzt. Bei einem Computersystem, bei dem jeder Prozessor 1 die Einträge 3 seines Adressumsetzpuffers 2 selber verwaltet, ist es vorteilhaft, dass der entsprechende Prozessor auch dazu eingerichtet ist, die Aktualisierung der Tabelle 9 vorzunehmen. Falls der Prozessor 1 die Verwaltung seines Adressumsetzpuffers 2 mit Hilfe einer Unterbrechungsaufforderung an das Betriebssystem weiterleitet, ist analog das Betriebssystem dazu eingerichtet, die Tabelle 9 zu aktualisieren.

In dem hier vorgestellten Ausführungsbeispiel ist für jede Speicherseite 6 und jeden Prozessor 1 ein Bit in der Tabelle 9 vorgesehen. Bei Mehrprozessor-Computersystemen mit vielen Prozessoren 1 erreicht die Tabelle 9 damit eine nicht unerhebliche Größe. Beträgt die Größe einer Speicherseite beispielsweise 4 kByte und weist das Computersystem 1024 Prozessoren auf, ist ein Bitvektor bereits 128 Byte groß. Die Tabelle 9 belegt dann 4 kByte/128 Byte = 1/32, also etwa 3%, des Arbeitsspeichers. In einer vorteilhaften Weiterbildung der Erfindung ist es dann möglich, die Prozessoren 1 für die Repräsentation in der Tabelle 9 in Gruppen vorgegebener Größe zusammenzufassen und jeweils eine Gruppe durch ein Bit im Bitvektor abzubilden. Das Bit ist dann zu setzen, wenn mindestens einer der Prozessoren 1 einer Gruppe einen Eintrag 3 zu einer bestimmten Speicherseite 6 aufweist. Wird ein Eintrag 3 in einem Adressumsetzpuffer 2 eines Prozessors 1 gelöscht, darf analog das Bit nur dann zurückgesetzt werden, wenn keiner der anderen Prozessoren 1 der Gruppe einen entsprechenden Eintrag 3 in seinem Adressumsetzpuffer 2 aufweist. Bei einer Änderung, die die Speicherseite 6 betrifft, wird dann an alle Prozessoren der Gruppe eine Meldung über das Bussystem 4 geschickt. Damit erhöht sich zwar wiederum der Datenverkehr auf dem Bussystem, dafür verringert sich der Speicherbedarf der Tabelle 9 um einen Faktor, der der Anzahl von Prozessoren 1 in einer Gruppe entspricht.

Die Erfindung ist selbstverständlich nicht auf dieses Ausführungsbeispiel beschränkt, sondern umfasst jede Kombination von Merkmalen des Ausführungsbeispiels und der Patentansprüche, auch wenn diese nicht explizit genannt sind.

Bezugszeichenliste
- 1a, 1b: Prozessor
- 2a, 2b: Adressumsetzpuffer
- 3a, 3b: Eintrag in dem Adressumsetzpuffer
- 4: Bussystem
- 5: Arbeitsspeicher
- 6A, 6B, 6C, 6D: Speicherseite
- 7: Adressumsetztabelle
- 8: Eintrag in der Adressumsetztabelle
- 9: Tabelle

- V: virtuelle Adresse einer Speicherseite
- P: physikalische Adresse einer Speicherseite
- Z: Zusatzinformation

## Patentansprüche

1. Verfahren zur Aktualisierung von Einträgen (3) von Adressumsetzpuffern (2) in einem Mehrprozessor-Computersystem, bei dem jeder Prozessor (1) einen Adressumsetzpuffer (2) aufweist und bei dem ein seitenweise virtuell adressierter Arbeitsspeicher (5) vorgesehen ist, wobei
- die Einträge des Adressumsetzpuffers (2) jeweils eine virtuellen Adresse (V) einer Speicherseite (6), eine zugeordnete physikalische Adresse (P) der Speicherseite (6) und Zusatzinformationen (Z) über die Speicherseite (6) aufweisen,
- eine Tabelle (9) im Arbeitsspeicher (5) vorgesehen ist, in die für jede Speicherseite (6) und jeden Prozessor (1) eingetragen wird, ob zu dieser Speicherseite (6) ein Eintrag (3) im Adressumsetzpuffer (2) des entsprechenden Prozessors (1) vorhanden ist, und
- bei einer Änderung der Zusatzinformationen (Z) oder bei einer Änderung oder einer Neuanlage oder einer Löschung der Zuordnung einer physikalischen Adresse (P) zu einer virtuellen Adresse (V) einer Speicherseite (6) eine Meldung ausschließlich an solche Prozessoren (1) gesendet wird, die einen Eintrag (3) für die entsprechende Speicherseite (6) in ihrem Adressumsetzpuffer (2) aufweisen.

2. Verfahren nach Anspruch 1, **dadurch gekennzeichnet, dass** die Einträge (3) der Adressumsetzpuffer (2) der Prozessoren (1) Kopien von Einträgen einer im Arbeitsspeicher (5) abgelegten Adressumsetztabelle (7) sind.

3. Verfahren nach einem der Ansprüche 1 oder 2, **dadurch gekennzeichnet, dass** bei einer Meldung, die die Änderung der Zusatzinformationen (Z) und/oder die Änderung der Zuordnung einer physikalischen Adresse (P) zu einer virtuellen Adresse (V) einer Speicherseite (6) betrifft, der entsprechende Eintrag (3) im Adressumsetzpuffer (2) des Prozessors (1), an den die Meldung gesendet wird, entsprechend geändert wird.

4. Verfahren nach einem der Ansprüche 1 oder 2, **dadurch gekennzeichnet, dass**
bei einer Meldung, die die Neuanlage der Zuordnung einer physikalischen Adresse (P) zu einer virtuellen Adresse (V) einer Speicherseite (6) betrifft, ein entsprechender Eintrag (3) im Adressumsetzpuffer (2) des Prozessors (1), an den die Meldung gesendet wird, erzeugt wird und in der Tabelle (9) vermerkt wird, dass dieser Eintrag (3) vorhanden ist.

5. Verfahren nach einem der Ansprüche 1 oder 2, **dadurch gekennzeichnet, dass**
bei einer Meldung, die die Löschung der Zuordnung einer physikalischen Adresse (P) zu einer virtuellen Adresse (V) einer Speicherseite (6) betrifft, der entsprechende Eintrag (3) im Adressumsetzpuffer (2) des Prozessors (1), der die Meldung enthält, gelöscht wird und in der Tabelle (9) vermerkt wird, dass dieser Eintrag (3) nicht vorhanden ist.

6. Verfahren nach einem der Ansprüche 1 bis 5, **dadurch gekennzeichnet, dass**
in der Tabelle (9) für jede Speicherseite (6) ein Bitvektor vorgesehen ist, in dem jedem Prozessor (1) ein Bit in dem Bitvektor zugewiesen wird und das Bit angibt, ob zu dieser Speicherseite (6) ein Eintrag (3) im Adressumsetzpuffer (2) des entsprechenden Prozessors (1) vorhanden ist oder nicht.

7. Verfahren nach einem der Ansprüche 1 bis 5, **dadurch gekennzeichnet, dass**
jeweils mehrere Prozessoren (1) einer Prozessorengruppe zugeordnet werden und in der Tabelle (9) für jede Speicherseite (6) ein Bitvektor vorgesehen ist, und jeder Prozessorengruppe ein Bit in dem Bitvektor zugewiesen wird und das Bit angibt, ob zu dieser Speicherseite (6) ein Eintrag (3) in mindestens einem der Adressumsetzpuffer (2) der Prozessoren (1), die der entsprechenden Prozessorengruppe zugeordnet sind, vorhanden ist oder nicht.

8. Mehrprozessor-Computersystem mit einem seitenweise virtuell adressiertem Arbeitsspeicher (5), bei dem jeder Prozessor (1) des Mehrprozessor-Computersystems einen Adressumsetzpuffer (2) aufweist, wobei
- die Einträge (3) des Adressumsetzpuffers (2) jeweils eine virtuellen Adresse (V) einer Speicherseite (6), eine zugeordnete physikalische Adresse (P) der Speicherseite (6) und Zusatzinformationen (Z) über die Speicherseite (6) aufweisen,
- eine Tabelle (9) im Arbeitsspeicher (5) vorgesehen ist, in der für jede Speicherseite (6) und jeden Prozessor (1) eingetragen ist, ob zu dieser Speicherseite (6) ein Eintrag (3) im Adressumsetzpuffer (2) des entsprechenden Prozessors (1) vorhanden ist, und
- ein Betriebssystem vorgesehen ist, das so eingerichtet ist, dass es bei einer Änderung der Zusatzinformationen (Z) oder bei einer Änderung oder einer Neuanlage oder einer Löschung der Zuordnung einer physikalischen Adresse (P) zu einer virtuellen Adresse (V) einer Speicherseite (6) eine Meldung ausschließlich an solche Prozessoren (1) sendet, die einen Eintrag (3) für die entsprechende Speicherseite (6) in ihrem Adressumsetzpuffer (2) aufweisen.

9. Mehrprozessor-Computersystem nach Anspruch 8, **dadurch gekennzeichnet, dass**
der Prozessor (1), der eine Meldung erhält, die die Änderung der Zusatzinformationen (Z) oder die Änderung oder die Neuanlage oder die Löschung der Zuordnung einer physikalischen Adresse (P) zu einer virtuellen Adresse (V) einer Speicherseite (6) betrifft, dazu eingerichtet ist, den entsprechenden Eintrag (3) in seinem Adressumsetzpuffer (2) abzuändern oder zu erzeugen oder zu löschen und in der Tabelle (9) zu vermerken, ob dieser Eintrag (3) in seinem Adressumsetzpuffer (2) vorhanden ist.

10. Mehrprozessor-Computersystem nach Anspruch 8, **dadurch gekennzeichnet, dass**
der Prozessor (1), der eine Meldung erhält, die die Änderung der Zusatzinformationen (Z) oder die Änderung oder die Neuanlage oder die Löschung der Zuordnung einer physikalischen Adresse (P) zu einer virtuellen Adresse (V) einer Speicherseite (6) betrifft, dazu eingerichtet ist, eine Unterbrechungsaufforderung abzugeben.

11. Mehrprozessor-Computersystem nach Anspruch 10, **dadurch gekennzeichnet, dass**
das Betriebssystem dazu eingerichtet ist, die Unterbrechungsaufforderung zu empfangen und den entsprechenden Eintrag (3) in dem Adressumsetzpuffer (2) des Prozessors (1), der die Unterbrechungsaufforderung gesendet hat, abzuändern oder zu erzeugen oder zu löschen und in der Tabelle (1) zu vermerken, ob dieser Eintrag (3) in dem Adressumsetzpuffer (2) vorhanden ist.
